# EUROPEAN PATENT APPLICATION

(11) **EP 4 782 345 A1**
(43) Date of publication of application: **29.07.2026**
(21) Application number: 24881222.4
(22) Date of filing: 20.08.2024
(51) Int. Cl.: B64U 70/97

(54) **AIRCRAFT LANDING PAD, AIRCRAFT HANGAR, AND CARRIER**

(30) Priority: 23.10.2023 CN 202311384777
(71) Applicant: SZ Zhuoyu Technology Co., Ltd., Shenzhen, Guangdong 518055 (CN)
(72) Inventor: BAO, Adam, Shenzhen, Guangdong 518055 (CN); LI, Hongshan, Shenzhen, Guangdong 518055 (CN); LIU, Bencheng, Shenzhen, Guangdong 518055 (CN); PENG, Chris, Shenzhen, Guangdong 518055 (CN); ZHANG, Han, Shenzhen, Guangdong 518055 (CN)
(74) Representative: Hautier IP - MC/EP
(86) International application number: PCT/CN2024/113479
(87) International publication number: WO 2025/086854

(57) **Abstract**

The present disclosure provides an aircraft apron, an aircraft hangar, and a vehicle. The aircraft apron includes a docking platform for landing an aircraft, and a position adjustment mechanism for adjusting the position of the aircraft that has landed on the docking platform and having at least two movable assemblies. The at least two movable assemblies are movable from a relatively central position toward a relatively peripheral position of the docking platform, and are configured to act on a structural member of the aircraft during movement so as to drive the aircraft from a landing position to a target position. The aircraft apron, aircraft hangar, and vehicle of the present application enable precisely positioning of the aircraft that has landed on the aircraft apron.

## Description

### TECHNICAL FIELD

The present application relates to the field of aircraft technology, particularly to an aircraft apron, an aircraft hangar, and a vehicle.

### BACKGROUND

With the continuous development of science and technology and aircraft technology, aircraft have been widely used in many fields. Accordingly, aircraft hangars have been developed to provide a dedicated landing site to support aircraft operations. When the aircraft lands in the aircraft hangar, it may interact with ground equipment, such as the aircraft hangar, to perform at least one of the following operations: charging, replacing a payload, replacing a battery, or replenishing raw materials, etc. Therefore, it is necessary to park the aircraft accurately at a desired position. However, aircraft in the related art generally have difficulty in precisely landing in an aircraft hangar.

### SUMMARY

The present application provides an aircraft apron, an aircraft hangar, and a vehicle, aimed at precisely positioning aircraft landing on the aircraft apron.

An embodiment of the present application provides an aircraft apron including:
a docking platform configured for landing an aircraft; and
a position adjustment mechanism configured for adjusting a position of the aircraft that has landed on the docking platform, and comprising at least two movable assemblies, wherein the at least two movable assemblies are movable from a relatively central position of the docking platform toward a relatively peripheral position of the docking platform, and are configured for acting on a structural member of the aircraft during movement, so as to drive the aircraft from a landing position to a target position.

Another embodiment of the present application provides an aircraft apron including:
a docking platform configured for landing an aircraft;
a position adjustment mechanism configured for adjusting a position of the aircraft landed on the docking platform, the position adjustment mechanism comprising at least two movable assemblies, each of the movable assemblies being configured to rotate relative to the docking platform, and act on a structural member of the aircraft during rotation so as to drive the aircraft from a landing position to a target position;
wherein each of the movable assemblies has a center, and the structural member of the aircraft is located at the rotation center when the aircraft moves to the target position.

Another embodiment of the present application provides an aircraft hangar, including:
a cabin; and
the aircraft apron described above, wherein the aircraft apron is receivable within the cabin, and the cabin is openable to allow an aircraft to land.

A further embodiment of the present application provides a vehicle including:
a power system configured for driving the vehicle to move; and
the aircraft hangar described above, carried by the vehicle.

The aircraft apron, aircraft hangar, and vehicle provided in the embodiments of the present application can adjust a position of the aircraft to a target location through a position adjustment mechanism, so as to achieve precise positioning of the aircraft that has landed on the aircraft apron. The aircraft is not required to land precisely at the target position, but only needs to land on the aircraft apron. This reduces the requirements for positioning and navigation accuracy for landing the aircraft.

It should be understood that the foregoing general description and the following detailed description are merely illustrative and explanatory, but not intended to limit the scope of the disclosure of the embodiments of the present application.

### BRIEF DESCRIPTION OF THE DRAWINGS

To more clearly illustrate the embodiments of the present application, the drawings used in the description of the embodiments will be briefly described below. Obviously, the illustrated drawings are some embodiments of the present application. Other drawings may be obtained by a person skilled in the art without inventive effort based on these drawings.
FIG. 1 is a schematic structural diagram of an aircraft apron provided by an embodiment of the present application, in which an aircraft is landed on a docking platform;
FIG. 2 is a schematic structural diagram of an aircraft apron viewed from one angle, provided by an embodiment of the present application;
FIG. 3 is a schematic structural diagram of the aircraft apron viewed from one angle, provided by an embodiment of the present application;
FIG. 4 is a schematic structural diagram of the aircraft apron viewed from another angle, provided by an embodiment of the present application;
FIG. 5 is a partial schematic structural diagram of the aircraft apron viewed from another angle, provided by an embodiment of the present application;
FIG. 6 is a partial schematic structural diagram of the aircraft apron viewed from another angle, provided by an embodiment of the present application;
FIG. 7 is a schematic structural diagram of an aircraft apron viewed from one angle, provided by another embodiment of the present application;
FIG. 8 is a schematic structural diagram of an aircraft apron provided by another embodiment of the present application, in which an aircraft is landed on a docking platform;
FIG. 9 is a schematic structural diagram of the aircraft apron viewed from another angle, provided by another embodiment of the present application;
FIG. 10 is a schematic structural diagram of an aircraft apron viewed from one angle, provided by yet another embodiment of the present application;
FIG. 11 is a schematic structural diagram of an aircraft apron viewed from one angle, provided by yet another embodiment of the present application;
FIG. 12 is a schematic structural diagram of an aircraft apron provided by yet another embodiment of the present application, in which an aircraft is landed on a docking platform;
FIG. 13 is a schematic structural diagram of the aircraft apron viewed from another angle, provided by an embodiment of the present application;
FIG. 14 is a schematic structural diagram of an aircraft apron provided by yet another embodiment of the present application;
FIG. 15 is a schematic structural diagram of an aircraft apron provided by yet another embodiment of the present application, in which an aircraft is landed on a docking platform;
FIG. 16 is a partial schematic structural diagram of an aircraft apron provided by yet another embodiment of the present application;
FIG. 17 is a schematic structural diagram of an aircraft apron provided by yet another embodiment of the present application;
FIG. 18 is a schematic structural diagram of an aircraft hangar provided by an embodiment of the present application;
FIG. 19 is a schematic structural diagram of an aircraft hangar provided by an embodiment of the present application; and
FIG. 20 is a schematic structural diagram of a vehicle provided by an embodiment of the present application.

### LIST OF ELEMENTS

- 1001: Vehicle
- 1000: Aircraft Hangar
- 100: Aircraft Apron
- 10: Docking Platform
- 20: Position Adjustment Mechanism
- 21: Movable assembly
- 2101: Force-applying portion
- 2102: Transmission portion
- 211: Force-applying Concave Surface
- 212: Rotation center
- 213: Enclosing member
- 214: Pushing member
- 2141: Pushing surface
- 2142: Antenna Portion
- 22: Drive device
- 221: Rotating disk
- 2211: Arc-shaped Guide
- 222: Drive member
- 223: Transmission structure
- 2231: Worm Gear
- 2232: Worm
- 23: Guide assembly
- 231: Guide slot
- 232: Stopper
- 24: Transmission assembly
- 241: Drive pulley
- 242: Driven pulley
- 243: Transmission belt
- 25: Transmission Device
- 26: Guide Groove
- 30: Limiting assembly
- 41: Sensor
- 42: Electrical Connection portion
- 43: Charging assembly
- 44: Battery swap assembly
- 45: Marker
- 200: Cabin
- 300: Mounting device
- 301: Connecting Arm mechanism
- 3011: First Connecting Arm
- 3012: Second Connecting Arm
- 302: Quick-release connector
- 2000: Aircraft
- 201: Aircraft Body
- 2011: Fuselage
- 2012: Arm
- 202: Power device
- 2021: Propeller
- 2022: Power Motor
- 203: Structural Member
- 2031: Landing Gear
- 3000: Power System

### DETAILED DESCRIPTION

The technical solutions of the embodiments of the present application will be described clearly and completely below with reference to the accompanying drawings. Obviously, the described embodiments are part rather than all the embodiments of the present application. Based on the embodiments in the present application, all other embodiments obtained by a person of ordinary skill in the art without inventive efforts shall fall within the scope of the present application.

It should be understood that terms "center," "longitudinal," "transverse," "length," "width," "thickness," "upper," "lower," "front," "rear," "left," "right," "vertical," "horizontal," "top," "bottom," "inner," "outer," "clockwise," "counterclockwise," and the like as used herein, refer to the orientation or positional relationships shown in the drawings. These terms are used solely for the convenience of describing the present application and simplifying the description, and are not intended to indicate or imply that the devices or elements referred to must have a specific orientation, be constructed in a specific orientation, or operate in a specific orientation. Therefore, they should not be construed as limiting the scope of the present application. Furthermore, the terms "first" and "second" and the like are used for descriptive purposes only and are not to be understood as indicating or implying relative importance or implicitly specifying the quantity of the technical features indicated thereby. Accordingly, a feature defined by "first" or "second" may explicitly or implicitly include one or more of said features. The term "a plurality of" or "multiple" as used herein, means two or more, unless explicitly indicated otherwise in the context.

It should also be understood that the terms used in the specification of the present application are intended solely for the purpose of describing specific embodiments and are not intended to limit the present application. As used herein, the singular forms "a" "an" and "the" may be intended to include the plural forms as well, unless explicitly indicated otherwise in the context.

It should further be understood that the term "and/or" as used herein includes any and all combinations of one or more of the associated listed items.

The present application provides an aircraft apron, an aircraft hangar, and a vehicle, which can accurately position an aircraft landed on the aircraft apron.

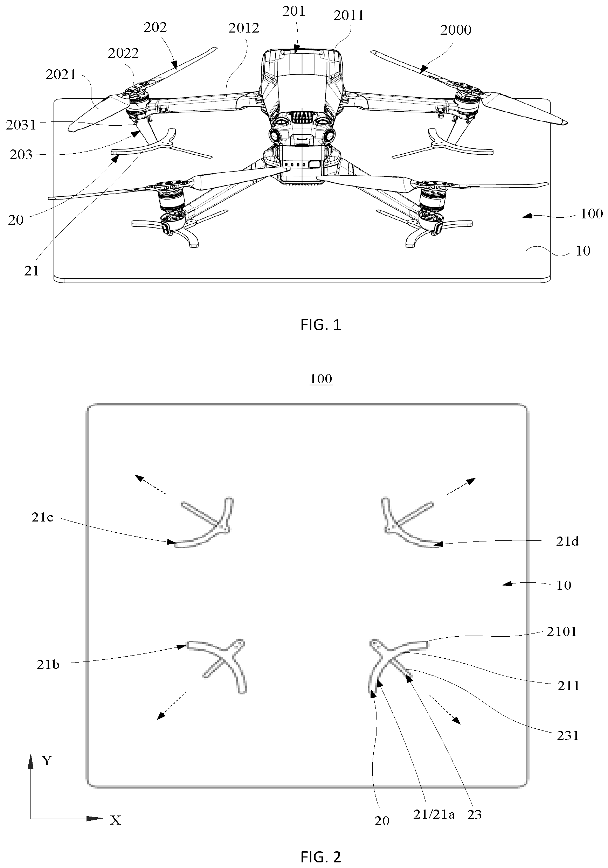

Referring to FIG. 1, an embodiment of the present application provides an aircraft apron 100 for landing or parking an aircraft 2000.

In some embodiments, the aircraft 2000 includes an unmanned aerial vehicle (UAV) that can be applied in at least one of the following fields: aerial photography, agriculture, plant protection, express delivery, disaster rescue, infectious disease monitoring, surveying and mapping, power line inspection, etc.

By way of example, the aircraft 2000 may be a rotary-wing UAV, a fixed-wing UAV, an unmanned helicopter, or a fixed-wing/rotary-wing hybrid UAV, etc. The rotary-wing UAV may be a single-rotor, dual-rotor, triple-rotor, quadcopter, hexacopter, octocopter, decacopter, or dodecacopter, etc.

In some embodiments, the aircraft 2000 includes an aircraft body 201 and a power device 202. The power device 202 is disposed on the aircraft body 201 and is configured to provide flight power for the aircraft 2000.

By way of example, the aircraft body 201 includes a fuselage 2011 and an arm 2012 connected to the fuselage 2011. The power device 202 is disposed on the arm 2012.

By way of example, there may be one or more arms 2012, extending radially from the fuselage 2011.

By way of example, the power device 202 may include a propeller 2021 and a power motor 2022. At least one of the power motor 2022 and the propeller 2021 is disposed on the arm 2012. The power motor 2022 is operatively connected to the propeller 2021 and configured to drive the propeller 2021 to rotate, so as to provide power for the flight of the aircraft 2000.

Referring to FIG. 1, in some embodiments, a structural member 203 of the aircraft 2000 cooperates with a position adjustment mechanism 20 of the aircraft apron 100 (as shown in FIG. 2) to allow the position adjustment mechanism 20 to act upon the structural member 203, thereby driving the aircraft 2000 to move from a landing position to a target position.

By way of example, the structural member 203 of the aircraft 2000 may include at least one of the following: a landing gear 2031 of the aircraft 2000 connected to at least one of the fuselage 2011 and the arm 2012, the arm 2012, the fuselage 2011, or the like.

For example, the structural member 203 includes the landing gear 2031; or the structural member 203 includes the fuselage 2011; or the structural member 203 includes the arm 2012; or the structural member 203 includes both the fuselage 2011 and the arm 2012.

In some embodiments, the structural member 203 (i.e., the landing gear 2031) is provided separately from the aircraft body 201. The connection method between the two may include at least one of the following: snap-fit, adhesive bonding, screw fastening, magnetic attraction, etc.

For example, the landing gear 2031 is connected to the arm 2012 of the aircraft body 201 by screw fastening.

In some embodiments, the structural member 203 (the landing gear 2031) is integrally formed with at least a portion of the aircraft body 201.

For example, the landing gear 2031 is integrally formed with the arm 2012 of the aircraft body 201; or the landing gear 2031 is integrally formed with the fuselage 2011 of the aircraft body 201.

In some embodiments, there are at least two structural members 203 (the landing gears 2031), such as two, three, four or more. The number of the structural members 203 (the landing gear 2031) of the aircraft 2000 may be configured according to actual requirements.

Referring to FIG. 2, in some embodiments, the aircraft apron 100 includes a docking platform 10 and a position adjustment mechanism 20. The docking platform 10 is configured to land the aircraft 2000. The position adjustment mechanism 20 is configured to adjust a position of the aircraft 2000 that has landed on the docking platform 10. The position adjustment mechanism 20 includes at least two movable assemblies 21. The movable assemblies 21 can act on the structural member 203 of the aircraft 2000 during movement, so as to drive the aircraft 2000 to move from a landing position to a target position.

The aircraft apron 100 can adjust the aircraft 2000 that has landed on the aircraft apron 100 to the target position through the position adjustment mechanism 20. Therefore, it is not necessary for the aircraft 2000 to land precisely at the target position, as long as the aircraft 2000 can land on the aircraft apron 100, thereby reducing the requirements for positioning and navigation accuracy for landing the aircraft 2000.

In some embodiments, when the position adjustment mechanism 20 moves the aircraft 2000 from the landing position to the target position, the aircraft 2000 can interact with ground equipment (not shown) to perform such as at least one of the following: charging, replacing a payload, replacing a battery, or replenishing raw materials, or the like.

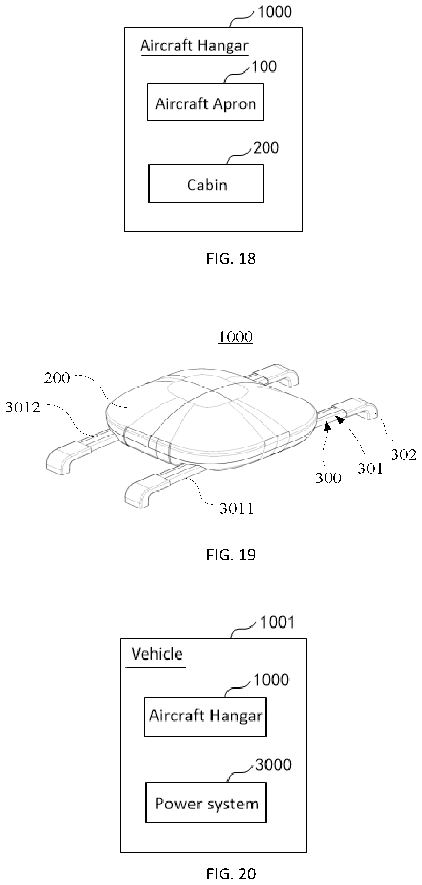

By way of example, the ground equipment may include an aircraft hangar 1000 (see FIG. 18) and/or other ground equipment (such as an airport, etc.).

By way of example, raw materials include at least one of the following: liquid raw materials and solid raw materials. The liquid raw materials include at least one of the following: gasoline, cleaning agent, liquid pesticide, etc. The solid raw materials include at least one of the following: solid pesticide, fire extinguishing powder, etc.

By example, moving the aircraft 2000 from the landing position to the target position via the position adjustment mechanism 20 can facilitate an operating device (not shown) of the ground equipment to perform operations for the aircraft 2000, such as replacing a payload, replacing a battery, or replenishing raw materials.

By way of example, the operating device includes a replacement mechanism (not shown) for replacing a payload or other components of the aircraft 2000 (such as a battery or water tank of the aircraft 2000, etc.).

By way of example, the replacement mechanism may include at least one of the following: a replacement manipulator, other auxiliary mechanical structures, etc.

By way of example, the payload may include at least one of the following: a gimbal, an imaging device, a detection sensor, etc.

By way of example, the imaging device includes at least one of the following: a camera, a video camera, a mobile phone, an ultrasonic imaging device, an infrared imaging device, etc.

By way of example, the operating device includes a replenishment mechanism (not shown) for replenishing raw materials to the aircraft 2000.

By way of example, the replenishment mechanism includes at least one of the following: a replenishment manipulator, other auxiliary mechanical structures, etc.

In some embodiments, the movable assemblies 21 are spaced apart to reduce or even avoid motion interference between different movable assemblies 21.

In some embodiments, at least two movable assemblies 21 are spaced apart along a first direction or a second direction, and the first direction is perpendicular to the second direction.

By way of example, the first direction is indicated by X in FIG. 2, and the second direction is indicated by Y in FIG. 2. Alternatively, the first direction intersects a diagonal of the docking platform 10. The first direction intersects the X and Y directions shown in FIG. 2. Alternatively, the first direction is parallel to or coincident with a diagonal of the docking platform 10; or the first direction is parallel to or coincident with a diagonal of a quadrilateral structure formed by the four landing gears 2031.

For example, at least two movable assemblies 21 are disposed along the diagonal of the docking platform 10. The size of the movable assemblies 21 can be designed to be small, thereby reducing the volume and weight of the aircraft apron 100.

In some embodiments, the positions of the movable assemblies 21 may be determined based on the positions of the structural members 203.

For example, the structural member 203 includes a landing gear 2031, with four landing gears 2031 forming a quadrilateral structure. At least two movable assemblies 21 are disposed along the diagonals of the quadrilateral structure, and the size of the movable assemblies 21 can be designed to be small, thereby reducing the volume and weight of the aircraft apron 100.

In some embodiments, the number of structural members 203 is the same as the number of movable assemblies 21, and each movable assembly 21 can act on one structural member 203. That is, the number of structural members 203 corresponds to the number of movable assemblies 21.

In other embodiments, the number of structural members 203 may also differ from the number of movable assemblies 21. That is, the number of movable assemblies 21 is less than or greater than the number of structural members 203.

In some embodiments, both the number of movable assemblies 21 and the number of structural members 203 may be configured according to actual requirements.

For example, the number of movable assemblies 21 and structural members 203 may be two, three, four, or more.

For example, there are two movable assemblies 21, each movable assembly 21 corresponding to one structural member 203.

For example, when there are four movable assemblies 21, they can drive four structural members 203 to move respectively.

Referring to FIG. 2, in this embodiment, the movable assemblies 21 include a movable assembly 21a, a movable assembly 21b, a movable assembly 21c, and a movable assembly 21d. The structural member 203 includes a landing gear 2031. There are four landing gears 2031 that form a quadrilateral structure. The movable assembly 21a and the movable assembly 21c are located on one diagonal of the quadrilateral structure, while the movable assembly 21b and the movable assembly 21d are located on the other diagonal of the quadrilateral structure. Consequently, the force exerted by the movable assemblies 21 on the structural member 203 can be decomposed into a first component force and a second component force along first and second directions (X direction and Y direction, respectively, as shown in FIG. 2) which are perpendicular to each other. The first component force enables structural member 203 to drive the aircraft 2000 to move toward the target position along the first direction, while the second component force enables structural member 203 to drive the aircraft 2000 to move toward the target position along the second direction that is perpendicular to the first direction, ensuring that the aircraft 2000 can be moved to the target position under the action of the two movable assemblies 21. In this embodiment, the size of each movable assembly 21 of the position adjustment mechanism 20 can be designed to be small, thereby reducing the volume and weight of the aircraft apron 100.

In other embodiments, the movable assemblies 21a, 21b, 21c, and 21d may also be arranged in other manners. For example, the movable assemblies 21a and 21c may be spaced apart along a first arrangement direction, and the movable assemblies 21b and 21d may be spaced apart along a second arrangement direction. The first arrangement direction is parallel to the diagonal of the quadrilateral structure, and the first arrangement direction intersects the second arrangement direction. For example, the first arrangement direction is perpendicular to the second arrangement direction. In other embodiments, one of the movable assemblies 21a, 21b, 21c, and 21d may also be omitted.

In other embodiments, two of the movable assemblies 21a, 21b, 21c, and 21d may also be omitted.

For example, the movable assemblies 21a and 21b may be omitted, or the movable assemblies 21b and 21c may be omitted, or the movable assemblies 21a and 21c may be omitted.

In some embodiments, the aircraft 2000 includes at least two structural members 203, and the at least two movable assemblies 21 can act on different structural members 203 respectively during movement, thereby driving the aircraft 2000 to move from the landing position to the target position.

For example, at a certain position on the movement trajectory of the aircraft 2000 from the landing position to the target position, only one movable assembly 21 may act on a corresponding structural member 203 to drive the aircraft 2000 to move; or a part of the movable assemblies 21 may act on the corresponding structural members 203 respectively to drive the aircraft 2000 to move; or all the movable assemblies 21 may act on the corresponding structural members 203 to drive the aircraft 2000 to move.

For example, in the process of moving the aircraft 2000 from the landing position to the target position, none of the movable assemblies 21 acts on the corresponding structural member 203 at a certain position on the movement trajectory of at least two movable assemblies 21. As the movable assemblies 21 move further, at least one of the plurality of the movable assemblies 21 may act on corresponding structural members 203, thereby driving the aircraft 2000 to move.

Referring to FIG. 2, in some embodiments, at least two movable assemblies 21 are movable from a relatively central position of the docking platform 10 toward a relatively peripheral position thereof. During movement, they can act on the structural member 203 of the aircraft 2000 so as to drive the aircraft 2000 to move from the landing position to the target position.

When the aircraft 2000 lands on the aircraft apron 100 of the above embodiment, the at least two movable assemblies 21 of the position adjustment mechanism 20 can move from a relatively central position of the docking platform 10 toward a relatively peripheral position of the docking platform 10, and act on the structural member 203 of the aircraft 2000 during movement, so as to drive the aircraft 2000 to move from the landing position to the target position, thereby achieving precise positioning of the aircraft 2000 that has landed on the aircraft apron 100. The aircraft apron 100 according to the present embodiment features a simple structure, convenient operation, a compact size, and light weight, which correspondingly reduces the energy consumption of the vehicle 1001 incorporating the aircraft apron 100(see FIG. 20). Furthermore, thanks to the simplified and lightweight design of the aircraft apron 100, the volume of the aircraft hangar 1000 that includes the aircraft apron 100 is significantly reduced. This greatly improves the flexibility in selecting an integration position between the aircraft hangar 1000 and the body (not shown) of the vehicle 1001, allowing the aircraft hangar 1000 to be installed more flexibly.

By way of example, during the process in which at least two movable assemblies 21 drive the aircraft 2000 from the landing position to the target position via the structural member 203, the direction of movement of the movable assemblies 21 is indicated by the dashed arrows near the movable assemblies 21, as shown in FIG. 2.

By way of example, at least two movable assemblies 21 are movable from a first position toward a second position. During movement, the movable assemblies 21 can act on the structural member 203 of the aircraft 2000, thereby driving the aircraft 2000 to move from the landing position to the target position.

By way of example, the first position is farther away from the periphery of the docking platform 10 than the second position, or the first position is closer to the center of the docking platform 10 than the second position.

By way of example, the first position is a relatively central position of the docking platform 10, and the second position is a relatively peripheral position of the docking platform 10.

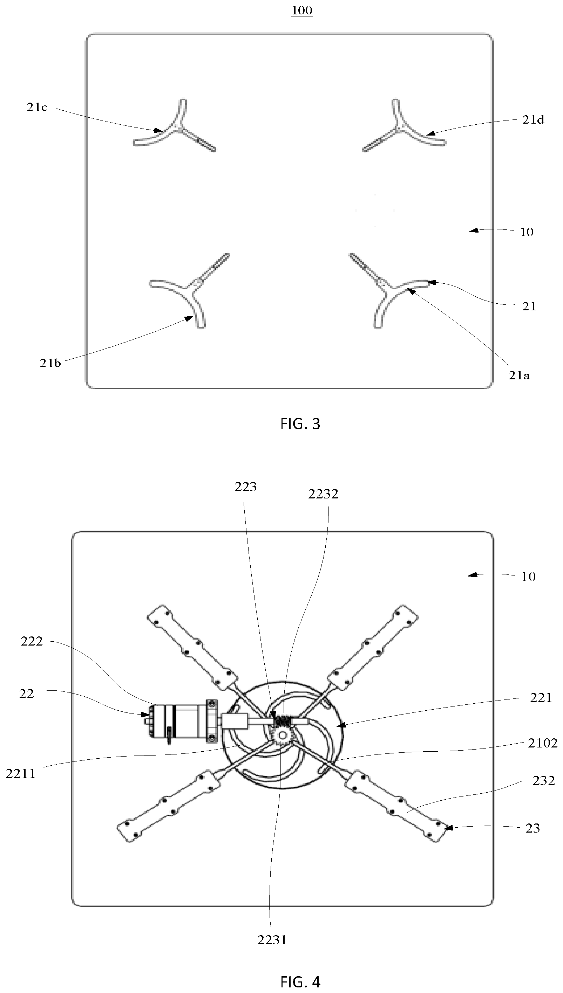

By way of example, the first position is the first limit position where the movable assemblies 21a, 21b, 21c, or 21d are located in FIG. 2, and the second position is the second limit position where the movable assemblies 21a, 21b, 21c, or 21d are located in FIG. 3. The first limit position is farther away from the periphery of the docking platform 10 than the second limit position, or the first limit position is closer to the center of the docking platform 10 than the second limit position.

In other embodiments, the first position may also not be the first limit position in FIG. 2, and the first position may be any suitable position between the first limit position and the second position. Similarly, the second position may also not be the second limit position in FIG. 3, and the second position may be any suitable position between the first position and the second limit position.

For example, when the movable assembly 21 moves to the second position, the aircraft 2000 moves to the target position.

Referring to FIG. 2, in some embodiments, the at least two movable assemblies 21 move in directions away from each other. It will be appreciated that the at least two movable assemblies 21 move in directions away from each other, such that at least one of the at least two movable assemblies 21 can act on the structural member 203 of the aircraft 2000 during movement, thereby driving the aircraft 2000 to move from the landing position to the target position. The movable assemblies 21 can be flexibly arranged, allowing a compact and lightweight configuration that occupies a small volume and reduces interference with the aircraft 2000. This, in turn, reduces the energy consumption of the vehicle 1001 that includes the aircraft apron 100.

In some embodiments, with reference to FIG. 2, a distance between at least two movable assemblies 21 gradually increases during movement.

For example, the distance between the at least two movable assemblies 21 gradually increases during movement, so that the at least two movable assemblies 21 can act on the structural member 203 of the aircraft 2000 during movement, thereby driving the aircraft 2000 to move from the landing position to the target position. The movable assemblies 21 can be flexibly arranged, allowing a compact and lightweight configuration that occupies a small volume, and reduces interference with the aircraft 2000. This, in turn, reduces the energy consumption of the vehicle 1001 that includes the aircraft apron 100.

In some embodiments, the at least two movable assemblies 21 move linearly or curvilinearly, so as to drive the aircraft 2000 from the landing position to the target position.

For example, the at least two movable assemblies 21 can move linearly from a relatively central position of the docking platform 10 toward a relatively peripheral position of the docking platform 10, so that during linear movement, the at least two movable assemblies 21 can act on the structural member 203 of the aircraft 2000 to drive the aircraft 2000 from the landing position to the target position.

By way of example, the at least two movable assemblies 21 can move curvilinearly from a relatively central position of the docking platform 10 toward a relatively peripheral position of the docking platform 10, so that during curved movement, the at least two movable assemblies 21 can act on the structural member 203 of the aircraft 2000 to drive the aircraft 2000 from the landing position to the target position.

By way of example, under the action of the at least two movable assemblies 21, the aircraft 2000 can move linearly or curvilinearly from the landing position to the target position.

In some embodiments, the at least two movable assemblies 21 move synchronously or asynchronously, so that during movement, the at least two movable assemblies 21 can act on the structural member 203 of the aircraft 2000, thereby driving the aircraft 2000 to move from the landing position to the target position.

In some embodiments, with reference to FIGS. 1 and 2, the movable assemblies 21 include a force-applying concave surface 211. During the movement of the movable assemblies 21, the force-applying concave surface 211 can abut against the structural member 203 to drive the aircraft 2000 to move, thereby achieving precise positioning of the aircraft 2000. During the process in which the at least two movable assemblies 21 drive the aircraft 2000 from the landing position to the target position, the force-applying concave surface 211 can effectively contact or abut against the structural member 203, thereby improving force transmission efficiency and ensuring that the position adjustment mechanism 20 can reliably and stably drive the aircraft 2000 from the landing position to the target position.

In some embodiments, with reference to FIGS. 1 and 2, the force-applying concave surface 211 can apply a force to the aircraft 2000 from a direction facing the exterior of the aircraft 2000. By way of example, at least two movable assemblies 21 can move from a relatively central position of the docking platform 10 toward a relatively peripheral position of the docking platform 10, and the force-applying concave surface 211 can apply a force to the structural member 203 of the aircraft 2000 from a direction facing the exterior of the aircraft 2000, thereby driving the aircraft 2000 from the landing position to the target position.

In some embodiments, the force-applying concave surface 211 includes at least one of the following: an arc-shaped surface, a spherical surface, a V-shaped surface, a U-shaped surface, a C-shaped surface, an S-shaped surface, other regular curved surfaces, or irregular curved surfaces. By way of example, the force-applying concave surface 211 includes an arc-shaped surface.

It should be understood that the term "force-applying concave surface" is named from the perspective of actively applying a force. In practical application, the structural member 203 may also apply a force to the force-applying concave surface 211, and the force-applying concave surface 211 may also be subjected to a force, which is not limited herein.

By way of example, when the aircraft 2000 is located at the landing position or the target position, the projection of the center of gravity of the aircraft 2000 onto the docking platform 10 is located among the plurality of movable assemblies 21 or the plurality of force-applying concave surfaces 211.

In some embodiments, with reference to FIG. 4, the position adjustment mechanism 20 further includes a drive device 22 for driving at least two movable assemblies 21 to move. The drive device 22 is disposed inside the aircraft apron 100 on a side opposite to the docking platform 10. Thus, interference between the drive device 22 and the aircraft 2000 can be avoided when the aircraft 2000 lands at the landing position or moves to the target position. In other embodiments, the drive device 22 may also be at least partially disposed on the side of the docking platform 10 facing the force-applying concave surface 211.

Referring to FIG. 4, in some embodiments, the drive device 22 includes a rotating disk 221. During rotation, the rotating disk 221 can drive at least two movable assemblies 21 to move away from or toward the center of the rotating disk 221. In this way, the number of motors or drive members 222 required can be reduced, thereby effectively lowering the cost of the aircraft apron 100. The volume and weight of the aircraft apron 100 can also be reduced to a certain extent. The reduced weight can further reduce the energy consumption of the vehicle 1001 that includes the aircraft apron 100.

In some embodiments, the drive device 22 further includes a drive member 222 for driving the rotating disk 221 to rotate.

By way of example, the drive member 222 includes at least one of the following: a motor, a cylinder, an electric linear actuator, an electro-hydraulic pushrod, etc.

Referring to FIG. 4, in some embodiments, the drive device 22 further includes a transmission structure 223, and the drive member 222 is operatively connected to the rotating disk 221 via the transmission structure 223. The transmission structure 223 includes at least one of the following: transmission rod, transmission belt, transmission chain, transmission gear, worm and worm gear, etc.

By way of example, the transmission structure 223 includes a worm gear 2231 and a worm 2232. The drive member 222 is drivingly connected to the worm gear 2231 via the worm 2232, and the worm gear 2231 is connected to the rotating disk 221. The transmission structure 223 can drive the rotating disk 221 to rotate under the actuation of the drive member 222.

In other embodiments, the rotating disk 221 may be driven to rotate by a second motor that is configured to drive the movement of other structural members (such as a cabin 200 of the aircraft hangar 1000), which is not limited herein. For example, the second motor can drive the cabin 200 of the aircraft hangar 1000 to open or close. The aircraft apron 100 can be accommodated within the cabin 200, and the cabin 200 can be opened to allow the aircraft 2000 to land on the aircraft apron 100 or take off from the aircraft apron 100. When the aircraft 2000 moves to the target position, the cabin 200 can be closed to protect the components inside the cabin 200 or the aircraft 2000, and to reduce the volume occupied by the cabin 200 to a certain extent. Additionally, the second motor can also drive the rotating disk 221 to rotate, eliminating the need to provide two separate motors (one for opening/closing of the cabin 200 and another for rotating the rotating disk 221). This can reduce the number of components required, lower costs, and can also reduce the volume and weight of the aircraft apron 100 to a certain extent. As the weight is reduced, energy consumption of the vehicle 1001 that includes the aircraft apron 100, can also be reduced.

By way of example, during rotation, the rotating disk 221 can drive at least two movable assemblies 21 to move away from the center thereof, such that the at least two movable assemblies 21 move from a relatively central position of the docking platform 10 toward a relatively peripheral position of the docking platform 10. During this movement, the at least two movable assemblies 21 can act on the structural member 203 of the aircraft 2000, thereby driving the aircraft 2000 to move from the landing position to the target position.

By way of example, the rotating disk 221 can drive at least two movable assemblies 21 to move toward the center thereof during rotation, thereby moving the movable assemblies 21 to their initial positions. This ensures that the position adjustment mechanism 20 can subsequently again move the aircraft 2000 that has landed on the aircraft apron 100, from the landing position to the target position.

By way of example, the force-applying concave surface 211 and the rotating disk 221 are respectively disposed on opposite sides of the docking platform 10.

Referring to FIG. 3, in some embodiments, the position adjustment mechanism 20 further includes a guide assembly 23 for defining the direction of movement of the movable assembly 21 relative to the docking platform 10. As the rotating disk 221 rotates, the movable assembly 21 moves along the direction defined by the guide assembly 23, enabling reliable and stable movement.

The structure, shape, and/or number of the guide assemblies 23 may be configured according to actual requirements. Referring to FIG. 2, for example, the guide assembly 23 includes a guide slot 231 for guiding the movement of the movable assembly 21. Additionally, the guide slot 231 is configured to allow at least a portion of the movable assembly 21 to pass through. By way of example, the number of guide slots 231 corresponds to the number of movable assemblies 21, such as one guide slot 231 for each movable assembly 21.

Referring to FIG. 4, in some embodiments, the guide assembly 23 includes a stopper 232, which is configured to restrict the movement of the movable assembly 21, so that the movable assembly 21 can slide or translate smoothly and reliably in a single direction. For example, the stopper 232 is connected to the docking platform 10 or other components of the aircraft hangar 1000.

Referring to FIG. 4, in some embodiments, the rotating disk 221 is provided with arc-shaped guides 2211 arranged in a fan-blade pattern. One end of the movable assembly 21 is connected to the arc-shaped guides 2211. As the arc-shaped guides 2211 rotate with the rotating disk 221, they drive the movable assembly 21 to move linearly. In this way, the rotational motion of the rotating disk 221 is converted into linear movement of the movable assembly 21, resulting in a clever and reasonable structural design.

In some embodiments, the number of arc-shaped guides 2211 corresponds to the number of the movable assemblies 21. For example, the number of arc-shaped guides 2211 is the same as the number of the movable assemblies 21, with one arc-shaped guide 2211 corresponding to one movable assembly 21. For example, the rotating disk 221 is provided with a plurality of arc-shaped guides 2211, each arc-shaped guide 2211 corresponding to one movable assembly 21. Thus, a single rotating disk 221 can drive at least two movable assemblies 21 to move, resulting in a simple structure of the drive device 22.

Referring to FIG. 4, by way of example, each arc-shaped guide 2211 includes an arc-shaped groove.

Referring to FIG. 4, in some embodiments, the movable assembly 21 includes a force-applying portion 2101 and a transmission portion 2102. The force-applying portion 2101 is connected to the transmission portion 2102. The force-applying concave surface 211 is provided on the force-applying portion 2101. One end of the transmission portion 2102 is connected to one arc-shaped guide 2211. When the arc-shaped guide 2211 rotates with the rotating disk 221, the arc-shaped guide 2211 can drive the transmission portion 2102 to move linearly, thereby driving the force-applying portion 2101 to move linearly. By way of example, the stopper 232 is configured to restrict the movement of the transmission portion 2102, so that the transmission portion 2102 can slide or translate in a single direction, thereby enabling the force-applying portion 2101 to slide or translate in a single direction.

By way of example, the force-applying portion 2101 is integrally formed with the transmission portion 2102. By way of example, the force-applying portion 2101 and the transmission portion 2102 are configured as separate components, and their connection methods include at least one of the following: adhesive bonding, snap-fit, magnetic attraction, threaded connection, screw fastening, etc.

By way of example, the transmission portion 2102 includes a transmission rod or any other suitable structure.

It can be understood that when the drive member 222 drives the rotary disk 221 to rotate via the transmission structure 223, a cylindrical head at the end of the transmission portion 2102 can slidingly engage with one arc-shaped guide 2211. Since the transmission portion 2102 is restricted by the stopper 232, the transmission portion 2102 can only perform telescoping movement in the direction guided by the stopper 232. Therefore, the rotation of the rotating disk 221 causes the transmission portion 2102 to slide or translate in a single direction, thereby driving the force-applying portion 2101 to move.

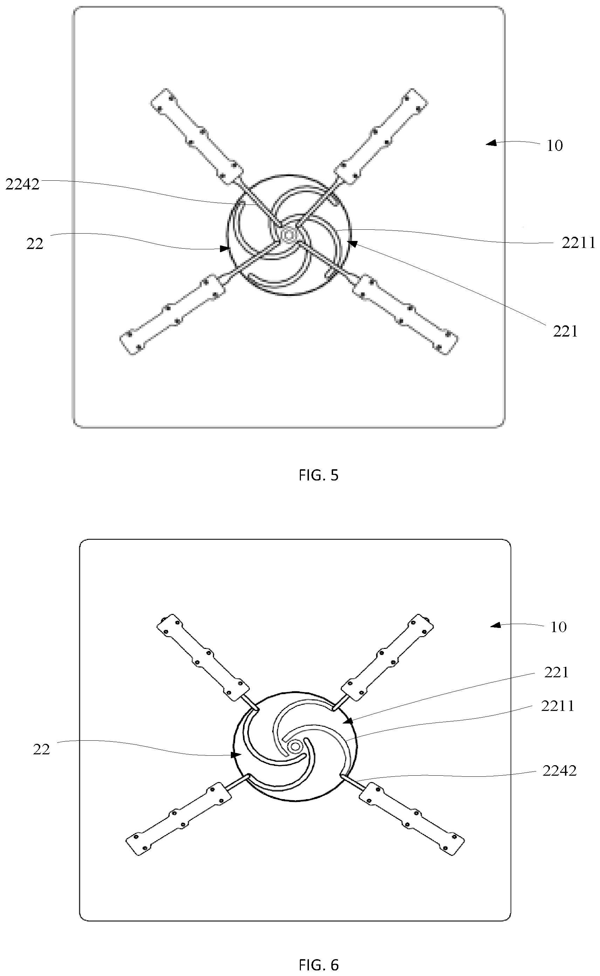

In some embodiments, the transmission portion 2102 can move from a third position to a fourth position, allowing the corresponding force-applying portion 2101 to move from a relatively central position of the docking platform 10 toward a relatively peripheral position of the docking platform 10. At least one of the at least two movable assemblies 21 can act on the structural member 203 of the aircraft 2000 during movement to drive the aircraft 2000 from the landing position to the target position. By way of example, the third position is closer to the center of the rotating disk 221 relative to the fourth position. For example, the third position corresponds to the position of the transmission portion 2102 shown in FIG. 5, and the fourth position corresponds to the position of the transmission portion 2102 shown in FIG. 6.

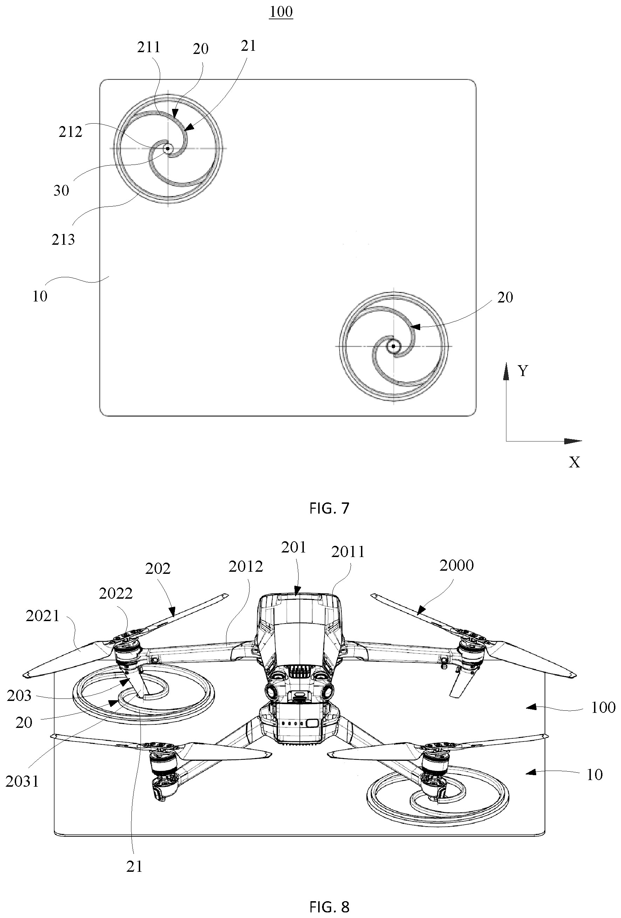

Referring to FIG. 7, an embodiment of the present application further provides an aircraft apron 100 including a docking platform 10 and a position adjustment mechanism 20. The docking platform 10 is configured to land the aircraft 2000. The position adjustment mechanism 20 is configured to adjust the position of the aircraft 2000 that has landed on the docking platform 10. The position adjustment mechanism 20 includes at least two movable assemblies 21. Each movable assembly 21 is rotatable relative to the docking platform 10, and is configured to act on the structural member 203 of the aircraft 2000 during rotation, so as to drive the aircraft 2000 to move from the landing position to the target position. The movable assembly 21 has a rotational center 212. When the aircraft 2000 moves to the target position, the structural member 203 of the aircraft 2000 is located at the rotational center 212.

The aircraft apron 100 of the above embodiment can adjust the aircraft 2000 that has landed on the aircraft apron 100 to the target position by the position adjustment mechanism 20. Thus, the aircraft 2000 need not land precisely at the target position, but only on the aircraft apron 100, thereby reducing the requirements for positioning and navigation accuracy for landing. Furthermore, when the aircraft 2000 lands on the aircraft apron 100, the movable assembly 21 can rotate relative to the docking platform 10. During this rotational movement, the movable assembly 21 can act on the structural member 203 of the aircraft 2000 to drive the aircraft 2000 to move from the landing position to the target position. When the aircraft 2000 moves to the target position, the structural member 203 of the aircraft 2000 is located at the rotational center 212 of the movable assembly 21, thereby achieving precise positioning of the aircraft 2000 that has landed on the aircraft apron 100. The aircraft apron 100 of this embodiment features a simple structure, convenient operation, a compact size, and light weight, which correspondingly reduces the energy consumption of the vehicle 1001 incorporating the aircraft apron 100(see FIG. 20). Furthermore, due to the simplified and lightweight structure of the aircraft apron 100, the volume of the aircraft hangar 1000 incorporating the aircraft apron 100 is significantly reduced. This greatly improves the flexibility in selecting an integration location between the aircraft hangar 1000 and the body (not shown) of the vehicle 1001, allowing the aircraft hangar 1000 to be installed more flexibly.

By way of example, the aircraft 2000 includes the aircraft 2000 of any of the above embodiments. The structural member 203 includes the structural member 203 of any of the above embodiments.

Referring to FIGS. 7 and 8, in some embodiments, the movable assembly 21 includes a force-applying concave surface 211 with a varying radius of curvature. When the movable assembly 21 rotates, the force-applying concave surface 211 can abut against the structural member 203 of the aircraft 2000 and drive the aircraft 2000 to move, thereby moving the aircraft 2000 from the landing position to the target position. Such movable assembly 21 is simple in structure, compact in size, and light in weight.

In some embodiments, the force-applying concave surface 211 is configured as an arc, and the radius of curvature of the arc gradually decreases along the direction of the force-applying concave surface 211 toward the rotational center 212. Thus, the force-applying concave surface 211 not only abuts against the structural member 203 of the aircraft 2000 and drives the aircraft 2000 to move, but also serves to guide the structural member 203 to a certain extent, thereby ensuring that the aircraft 2000 can move reliably and stably to the target position.

The number of force-applying concave surfaces 211 can be configured according to actual requirements, such as one, two, or more. In some embodiments, each movable assembly 21 includes at least two force-applying concave surfaces 211 arranged in a fan-blade pattern, providing a compact structure with a small footprint and improving the efficiency with which the movable assembly 21 drives the structural member 203.

In some embodiments, at least two movable assemblies 21 rotate in the same direction. This minimizes the forces exerted by different movable assemblies 21 on the aircraft 2000 in opposite directions, ensuring that the aircraft 2000 can move to the target position reliably and smoothly. In other embodiments, at least two of the movable assemblies 21 may rotate in different directions.

Referring to FIG. 7, in some embodiments, the movable assembly 21 further includes an enclosing member 213 arranged to surround the force-applying concave surface 211. After the aircraft 2000 lands on the docking platform 10, the structural member 203 of the aircraft 2000 is positioned between the enclosing member 213 and the force-applying concave surface 211. The provision of the enclosing member 213 is configured to limit the movement of the structural member 203. During the process in which the position adjustment mechanism 20 moves the aircraft 2000 from the landing position to the target position, the structural member 203 can be confined between the enclosing member 213 and the force-applying concave surface 211, preventing the structural member 203 from disengaging from an effective force-applying region of the force-applying concave surface 211. This avoids the problem that the force-applying concave surface 211 may not effectively abut against the structural member 203 during the rotational movement of the movable assembly 21, ensuring that the movable assembly 21 can move the aircraft 2000 to the target position smoothly and precisely.

Referring to FIG. 7, in some embodiments, one end of the force-applying concave surface 211 is connected to the enclosing member 213, while the other end thereof extends toward the rotational center 212. In this way, the structural member 203 can be reliably positioned between enclosing member 213 and force-applying concave surface 211, ensuring that the structural member 203 can move reliably, smoothly, and precisely toward the rotational center 212 under the action of force-applying concave surface 211, so that the aircraft 2000 can be accurately moved to the target position.

In some embodiments, the enclosing member 213 is circular, elliptical, or has other regular or irregular shapes.

In some embodiments, the height of the movable assembly 21 relative to the docking platform 10 is lower than that of the structural member 203 relative to the docking platform 10. This minimizes the likelihood of interference between the movable assembly 21 and the aircraft 2000 (such as the arm 2012, the structural member 203, or the power device 202 of the aircraft 2000) and allows the movable assembly 21 to apply a force to the structural member 203 to drive the aircraft 2000 to the target position.

In some embodiments, after the aircraft 2000 is positioned at the target location, the movable assembly 21 can continue rotating without interfering with the structural member 203. During rotation, the movable assembly 21 generates airflow, thereby dissipating heat from components of the aircraft hangar 1000 that includes the aircraft apron 100(the components may include the aircraft 2000 or parts of the aircraft hangar 1000, etc.). This expands the functions of the movable assembly 21, reduces the need for additional cooling fans, decreases the number of components required, simplifies the structure, effectively lowers costs, and reduced the occupied volume and weight. The reduced weight also correspondingly reduces the energy consumption of the vehicle 1001 that includes the aircraft apron 100. For example, after the aircraft 2000 is positioned at its target location, the at least two movable assemblies 21 can continue rotating and blow out airflows in at least two different directions during rotation, enabling rapid circulation of airflow inside the aircraft hangar 1000, effectively controlling the temperature inside the aircraft hangar 1000, and further reducing the number of cooling fans used in the aircraft hangar 1000.

For example, when the aircraft 2000 is positioned at the target location, the movable assembly 21 does not come into contact with the structural member 203, thereby allowing the movable assembly 21 to continue rotating without interfering with the structural member 203.

In some embodiments, after the aircraft 2000 is positioned at the target location, the rotational speed of the movable assembly 21 can be adjusted to generate airflow to dissipate heat from the aircraft 2000. In this way, the movable assembly 21 can both drive the aircraft 2000 smoothly from the landing position to the target position and dissipate heat from the aircraft 2000 after the aircraft 2000 has moved to the target position. In some embodiments, each movable assembly 21 rotates relative to the docking platform 10 at a first rotational speed while applying a force to structural member 203 of the aircraft 2000 to drive the aircraft 2000 from the landing position to the target position. After the aircraft 2000 is positioned at the target location, the rotational speed of the movable assembly 21 is adjusted to a second rotational speed to generate airflow for dissipate heat from the aircraft 2000. The first rotational speed is, for example, lower than the second rotational speed. During the process in which the movable assembly 21 rotates at the first rotational speed to drive the aircraft 2000 from the landing position to the target position, the magnitude of the first rotational speed may remain constant or may be adjusted as needed. Similarly, when the movable assembly 21 rotates at the second rotational speed to generate airflow for heat dissipation, the magnitude of the second rotational speed may remain constant or be adjusted as needed, and no limitation is made herein. In other embodiments, the first rotational speed may also be greater than or equal to the second rotational speed.

Referring to FIG. 7, in some embodiments, a limiting assembly 30 is provided at the rotational center 212. After the aircraft 2000 moves to the target position, the structural member 203 is held in place by the limiting assembly 30 so as to be reliably positioned at a desired location, which in turn ensures that the aircraft 2000 is reliably positioned at the target location.

In some embodiments, the limiting assembly 30 includes a groove recessed into the docking platform 10. After the aircraft 2000 moves to the target position, the structural member 203 can engage with the groove to achieve limiting of the structural member 203. The limiting assembly 30 has a simple structure and occupies a small space.

In other embodiments, the limiting assembly 30 may also be any other suitable structure. For example, the limiting assembly 30 may include a magnetic attraction mechanism to apply an attractive force to the structural member 203. The magnetic attraction mechanism may include, for example, a magnet or other structure capable of generating a magnetic field.

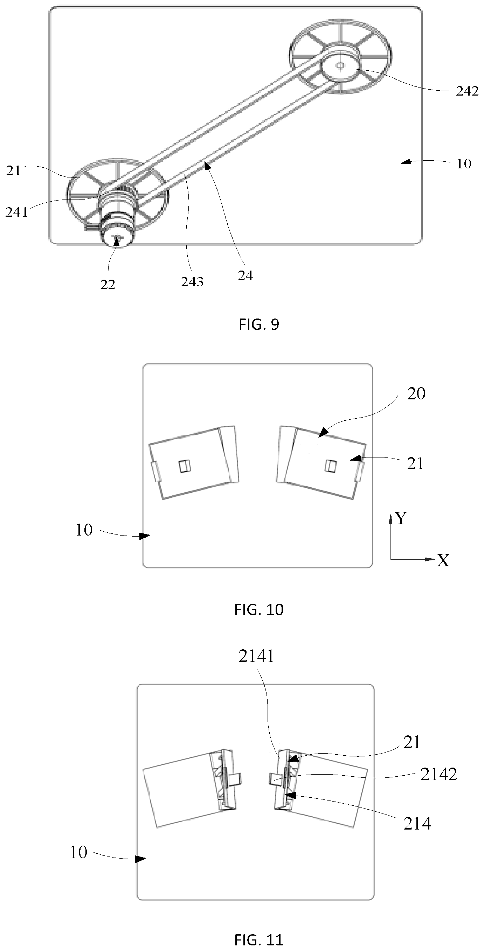

Referring to FIG. 9, in some embodiments, the position adjustment mechanism 20 includes drive devices 22, and the at least two movable assemblies 21 correspond to at least two drive devices 22, respectively. This enables independent movement control of movement of the at least two movable assemblies 21, allowing for flexible control. Each movable assembly 21, for example, corresponds to one drive device 22.

In some embodiments, the at least two movable assemblies 21 are driven by the same drive device 22. In this way, the movement control of each movable assembly 21 is simplified, the number of drive devices 22 is reduced, and the structure is simple, which contributes to reducing the occupied volume and weight of the aircraft apron 100, and correspondingly reduces the energy consumption of the vehicle 1001 that includes the aircraft apron 100. The drive device 22 includes, for example, a motor.

Referring to FIG. 9, in some embodiments, when the at least two movable assemblies 21 are driven by the same drive device 22, one of the movable assemblies 21 serves as the driving member, and is configured to drive the other movable assemblies 21 to rotate via a transmission assembly 24. The position adjustment mechanism 20 has a simple structure and a reduced number of drive devices 22.

In some embodiments, the transmission assembly 24 includes at least one of the following: a transmission rod, a transmission belt, a transmission chain, transmission gears, etc. The transmission assembly 24 has a simple structure.

Referring to FIG. 9, the transmission assembly 24 includes, for example, a drive pulley 241, a driven pulley 242, and a transmission belt 243. The drive pulley 241 is connected to a driving member (one of the movable assemblies 21), and the driven pulley 242 is connected to the other movable assembly 21. The drive belt 243 is connected to the drive pulley 241 and the driven pulley 242, serving to transmit motion. The drive device 22 is connected to the drive pulley 241 to provide power for the rotation of the drive pulley 241.

Referring to FIGS. 10 to 12, an embodiment of the present application further provides an aircraft apron 100, including a docking platform 10 and a position adjustment mechanism 20. The docking platform 10 is configured to land the aircraft 2000, and the position adjustment mechanism 20 is configured to adjust the position of the aircraft 2000 that has landed on the docking platform 10. The position adjustment mechanism 20 includes at least two movable assemblies 21. Each movable assembly 21 rotates relative to the docking platform 10 and acts on the structural member 203 of the aircraft 2000, so as to drive the aircraft 2000 to move from the landing position to the target position. The aircraft apron 100 can adjust the aircraft 2000 that has landed on the aircraft apron 100 to the target position via the position adjustment mechanism 20. Consequently, the aircraft 2000 is not required to land precisely at the target position, but only needs to land on the aircraft apron 100, thereby reducing the requirements for positioning and navigation accuracy for landing the aircraft 2000.

Referring to FIG. 10, in some embodiments, each movable assembly 21 includes a pushing member 214. When the movable assembly 21 rotates, it drives the pushing member 214 to move, causing the pushing member 214 to push the aircraft 2000 from the landing position to the target position. In the aircraft apron 100, when the movable assembly 21 rotates, it drives the pushing member 214 to move, causing the pushing member 214 to push the aircraft 2000 to move from the landing position to the target position, thereby achieving precise positioning of the aircraft 2000 that has landed on the aircraft apron 100. The aircraft apron 100 of this embodiment features a simple structure, convenient operation, a compact size, and light weight. Furthermore, due to the simplified structure and lightweight design of the aircraft apron 100, the volume of the aircraft hangar 1000 incorporating the aircraft apron 100 is significantly reduced. This greatly improves the flexibility in selecting an integration location between the aircraft hangar 1000 and the body (not shown) of the vehicle 1001, allowing the aircraft hangar 1000 to be installed more flexibly.

In some embodiments, the pushing member 214 can flip relative to the docking surface, and can push the aircraft 2000 to move during flipping, thereby pushing the aircraft 2000 to the target position.

In some embodiments, the pushing member 214 can abut against the body 201 of the aircraft 2000 during flipping. For example, the pushing member 214 abuts against the arm 2012 and/or the fuselage 2011 during flipping.

Referring to FIG. 10, in some embodiments, the pushing member 214 includes a pushing surface 2141. When the aircraft 2000 is not docked against the docking surface, the pushing surface 2141 is not higher than the docking surface, thereby reducing the occupied space of the aircraft apron 100 and interference of the moving assembly 21 with the aircraft 2000 or other components. For example, the thrust surface 2141 can abut against the arm 2012 of the aircraft 2000, such that the force exerted by the pushing member 214 on the arm 2012 can be decomposed into a first component force and a second component force along first and second directions that are perpendicular to each other. The first component force can drive the aircraft 2000 to move toward the target position along the first direction, and the second component force can drive the aircraft 2000 to move toward the target position along the second direction, ensuring that the aircraft 2000 is accurately moved to the target position under the action of the two movable assemblies 21. In this embodiment, the volume of each movable assembly 21 of the position adjustment mechanism 20 can be designed to be small, thereby reducing the volume and weight of the aircraft apron 100.

By way of example, the first direction is shown as the X direction in FIG. 10, and the second direction is shown as the Y direction in FIG. 10.

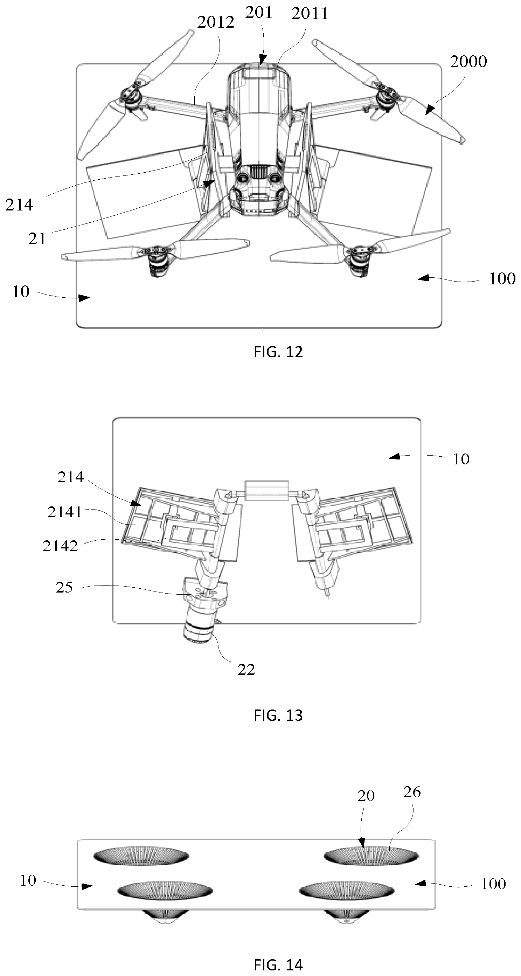

By way of example, when no aircraft 2000 is docked on the docking surface, the position of the pushing member 214 relative to the docking platform 10 is as shown in FIG. 10. When the pushing member 214 drives the aircraft 2000 to move to the target position, the position of the pushing member 214 relative to the docking platform 10 is as shown in FIG. 11 or FIG. 12.

Referring to FIG. 10, in some embodiments, the pushing member 214 further includes an antenna portion 2142 protruding from the pushing surface 2141. During the flipping process of the pushing member 214, the antenna portion 2142 abuts against the aircraft 2000 earlier than the pushing surface 2141 does. By way of example, there are two movable assemblies 21, each movable assembly 21 corresponds to one pushing member 214. After the aircraft 2000 is precisely positioned, the antenna portions 2142 of the two pushing members 214 can clamp the fuselage 2011 of the aircraft 2000 to secure its position.

Referring to FIG. 12, in some embodiments, the antenna portions 2142 may abut against the fuselage 2011 of the aircraft 2000, and the pushing surfaces 2141 may abut against the arms 2012 of the aircraft 2000.

In some embodiments, the antenna portion 2142 is retractable relative to the pushing surface 2141. After the antenna portion 2142 abuts against the aircraft 2000, as the pushing member 214 continues to flip, the length by which the antenna portion 2142 extends beyond the pushing surface 2141 decreases, so that the pushing surface 2141 can abut against the aircraft 2000.

Referring to FIG. 13, in some embodiments, the position adjustment mechanism 20 further includes a drive device 22 configured to drive the pushing member 214 to move. For example, the drive device 22 may include a motor or a cylinder, or the like. Referring to FIG. 13, by way of example, the drive device 22 is drivingly connected to the at least two movable assemblies 21 via a transmission device 25, so that the drive device 22 can drive the at least two movable assemblies 21 to move, thereby reducing the number of drive devices 22 required, reducing volume and weight, and lowering costs. By way of example, the transmission device 25 includes one or more rods, and the transmission device 25 has a simple structure.

Referring to FIG. 1 or FIG. 8, in some embodiments, the structural member 203 includes a landing gear 2031 of the aircraft 2000. After the aircraft 2000 lands on the docking platform 10, the landing gear 2031 is configured to support the aircraft 2000, so that the aircraft 2000 cab be reliably and stably parked on the docking platform 10. The structural member 203 can both cooperate with the movable assembly 21 and serve to support the aircraft 2000, achieving functional versatility without providing two separate components. The reduced number of components helps reduce the occupied volume and weight of the aircraft 2000, as well as the energy consumption thereof.

By way of example, there are at least two landing gears 2031. The number of landing gears 2031 is less than or equal to the number of movable assemblies 21.

Referring to FIG. 2 or FIG. 7 in conjunction with FIG. 1 or FIG. 8, in some embodiments, four landing gears 2031 form a quadrilateral structure. Two movable assemblies 21 are positioned on the diagonals of the quadrilateral structure, such that the forces applied by them to the structural member 203 can be decomposed into a first component force and a second component force along a first direction and a second direction perpendicular to each other. The first component force enables the structural member 203 to drive aircraft 2000 to move toward the target position along the first direction, while the second component force enables the structural member 203 to drive aircraft 2000 to move toward the target position along the second direction, thereby ensuring that aircraft 2000 can be precisely moved to the target position under the action of the two movable assemblies 21. In the position adjustment mechanism 20 of this embodiment, each movable assembly 21 can be designed to be compact, thereby reducing the volume and weight of the aircraft apron 100.

For example, the first direction is parallel to one of the sides of the quadrilateral structure, and both the first and second directions lie in the plane where the quadrilateral structure is located.

For example, the first direction is shown as the X direction in FIG. 2 or FIG. 7, and the second direction is shown as the Y direction in FIG. 2 or FIG. 7.

Referring to FIGS. 14 to 16, an embodiment of the present application further provides an aircraft apron 100 including a docking platform 10 and a position adjustment mechanism 20. The docking platform 10 is configured to land the aircraft 2000, and the position adjustment mechanism 20 is configured to adjust the position of the aircraft 2000 that has landed on the docking platform 10. The position adjustment mechanism 20 includes a guide groove 26. When the structural member 203 of the aircraft 2000 falls into the notch of the guide groove 26, the guide groove 26 can be in guiding engagement with the structural member 203 in a guided manner, causing the structural member 203 to move relative to the guide groove 26, so that the aircraft 2000 moves from the landing position to the target position.

In the above embodiment, the aircraft apron 100 can adjust the aircraft 2000 that has landed on the aircraft apron 100 to the target position by the position adjustment mechanism 20. Consequently, the aircraft 2000 is not required to land precisely at the target position, but only needs to land on the aircraft apron 100, thereby reducing the requirements for positioning and navigation accuracy for landing the aircraft 2000. Furthermore, since the position adjustment mechanism 20 includes a guide groove 26, when the structural member 203 of the aircraft 2000 falls into the notch of the guide groove 26, the guide groove 26 can engage with the structural member 203 to allow the structural member 203 to move relative to the guide groove 26, thereby driving the aircraft 2000 from the landing position to the target position. The positioning of the aircraft 2000 is simple and energy-efficient. The position adjustment mechanism 20 has a simple structure, is compact, and lightweight, thereby reducing the energy consumption of the vehicle 1001 that includes the aircraft apron 100. Furthermore, due to the simplified and lightweight structure of the aircraft apron 100, the volume of the aircraft hangar 1000 incorporating the aircraft apron 100 is significantly reduced. This greatly improves the flexibility in selecting an integration location between the aircraft hangar 1000 and the body (not shown) of the vehicle 1001, allowing the aircraft hangar 1000 to be installed more flexibly.

In some embodiments, when the structural member 203 falls into the notch of guide groove 26, the structural member 203 can slide along the sidewall of guide groove 26 toward the bottom of the groove under the action of gravity of aircraft 2000, causing the aircraft 2000 to move from the landing position to the target position. In this way, when the aircraft 2000 moves from the landing position to the target position, no motor or other power source is needed, thereby saving energy consumption and reducing costs.

In some embodiments, the groove sidewall of the guide grove 26 is inclined relative to the gravity direction of the docking platform 10, such that the cross-sectional area at the groove bottom of the guide groove 26 is smaller than that at the notch. This allows the structural member 203 to easily enter the notch of the guide groove 26 and enables the dimensions of the guide groove 26 to be reduced, thereby saving raw materials and lowering costs.

In some embodiments, the cross-sectional area of the guide groove 26 gradually increases from the groove bottom toward the notch, so as to ensure that the aircraft 2000 can be precisely positioned at the target location.

In some embodiments, at least one of the sidewall and the bottom of the guide groove 26 is formed with a perforated structure to allow gas to flow into or out of the guide groove 26 therethrough. This facilitates heat dissipation for the aircraft 2000 parked on the docking platform, such as heat dissipation for a battery or other heat-generating components of the aircraft 2000.

The number of guide grooves 26 may be configured according to actual requirements, such as one, two, three, four, or more. By way of example, the number of guide grooves 26 corresponds to the number of the structural members 203. Referring to FIG. 14, in some embodiments, there are four guide grooves 26, arranged in pairs diagonally opposite one another. In some embodiments, there are at least two guide grooves 26, at least one of them allows gas to enter the aircraft hangar 1000, and the other allows gas to exit the aircraft hangar 1000. When a fan inside the aircraft hangar 1000 or an external fan is operating, one of the at least two guide grooves 26 allows relatively low-temperature air to enter the aircraft hangar 1000, while the other allows relatively high-temperature air to exit the aircraft hangar 1000, thereby dissipating heat from components within the aircraft hangar 1000 or from the aircraft 2000.

For example, when the aircraft 2000 is close to above the docking platform 10 and the structural member 203 is substantially aligned with the notch of the guide groove 26, the propeller 2021 of the aircraft is located above the guide groove 26. The downward airflow driven by the rotation of the propeller 2021 flows through the perforated structure of the guide groove 26. The high-speed airflow creates a negative pressure inside the guide groove 26 (negative pressure is formed on the sidewall of the airflow passage), which serves to adsorb and/or guide the aircraft 2000. As the aircraft 2000 continues descending, the structural member 203 mounted on the aircraft 2000 enters the range of the notch of the guide groove 26. When the aircraft 2000 detects that a distance between the fuselage 2011 and the docking platform 10 is less than or equal to a preset distance, the power motor 2022 of the aircraft stops operating or gradually reduces its output power, causing the aircraft 2000 to slide along the inner wall of the guide groove 26 via the structural member 203 until it reaches the bottom of the guide groove 26. The structural member 203 fits well with the inner wall of the guide groove 26, and the aircraft 2000 moves to the target position, completing its precise positioning.

The movable assembly 21 may be provided at any suitable position on the docking platform 10 according to actual needs. For example, at least some of the movable assemblies 21 may be provided at a suitable position on the docking platform 10. At least some of the movable assemblies 21 may be selectively provided at one of at least two different positions on the docking platform 10 according to actual needs, so that the movable assemblies 21 can cooperate with the structural members 203 of different sizes, or so that the movable assemblies 21 can adapt to aircraft 2000 of different specifications.

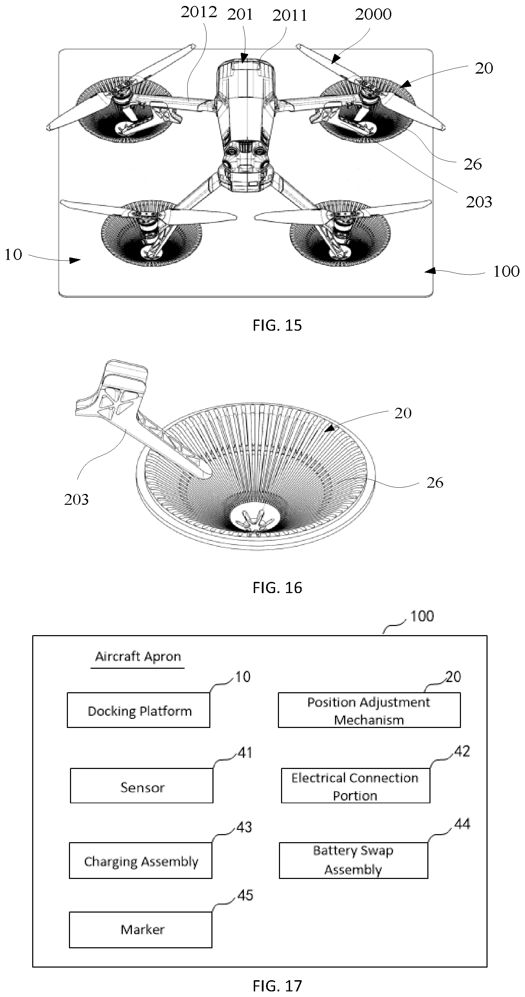

Referring to FIG. 17, in some embodiments, the target position or docking platform 10 is provided with a sensor 41 that is configured to detect whether the aircraft 2000 is located at the target position, thereby ensuring that subsequent operations on the aircraft 2000 can be executed smoothly. When the aircraft 2000 is detected to be at the target position, the ground equipment may perform at least one of the following operations on the aircraft 2000: charging, replacing a payload, replacing a battery, or replenishing raw materials.

In some embodiments, the sensor 41 includes at least one of a stress sensor, a photoelectric sensor, a vision sensor, and a weighing sensor, and the like.

Referring to FIG. 17, in some embodiments, the target position or docking platform 10 is provided with an electrical connection portion 42. After the structural member 203 is positioned at the target position, the docking platform 10 communicates with and/or energizes the aircraft 2000 via the electrical connection portion 42, enabling the aircraft apron 100 to communicate with the aircraft 2000 or charge the aircraft 2000. By way of example, the electrical connection portion 42 includes metal contacts, and the docking platform 10 can charge the aircraft 2000 through the metal contacts. In other embodiments, the electrical connection portion 42 may also be a wireless charging structure, and the docking platform 10 wirelessly charges the aircraft 2000 via the electrical connection portion 42.

Referring to FIG. 17, in some embodiments, the target location or docking platform 10 is provided with a charging assembly 43. After the aircraft 2000 is positioned at the target location, the charging assembly 43 can charge the aircraft 2000. In some embodiments, the target location or docking platform 10 is provided with a battery swap assembly 44 for replacing the battery inside the aircraft 2000, after the aircraft 2000 is positioned at the target location. The battery swap assembly 44 may, for example, include a battery swap manipulator.

Referring to FIG. 17, in some embodiments, the docking platform 10 is provided with a marker 45 to assist the landing of the aircraft 2000. The provision of the marker 45 allows the aircraft 2000 to supplement a more precise visual positioning system on the basis of a Global Positioning System (GPS) and/or other positioning systems, thereby improving the positioning accuracy of the aircraft 2000. This enables the aircraft 2000 to take off or land not only on a stationary vehicle 1001 but also on a moving vehicle 1001. Consequently, the aircraft 2000 can more easily takeoff and land precisely on a moving vehicle 1001. By way of example, the aircraft 2000 is provided with a vision device (not shown), which calibrates the marker 45 of the docking platform 10 to assist the aircraft 2000 in landing on the docking platform 10. The vision device includes a vision sensor, which is at least one of the following: a monocular vision sensor, a binocular vision sensor, etc.

By way of example, the movable assembly 21 is at least partially made of a colorless, transparent material to minimize the obstruction of the pattern or marker 45 of the docking platform 10 by the movable assembly 21.

In some embodiments, the aircraft apron 100 is provided with a lighting system (not shown) for providing lighting in low-light environments, enabling the aircraft 2000 to operate stably even in dim light conditions.

It will be understood that when the aircraft 2000 moves to the target position, it may be limited and/or secured by means of a magnetic attraction mechanism, a clamping mechanism, or a locking mechanism.

Referring to FIG. 18, the present application provides an aircraft hangar 1000 including a cabin 200 and the aircraft apron 100 according to any of the above embodiments. The aircraft apron 100 can be accommodated in the cabin 200. The cabin 200 can be opened to allow the aircraft 2000 to land. By way of example, the aircraft 2000 includes the aircraft 2000 according to any of the above embodiments. The structural member 203 includes the structural member 203 according to any of the above embodiments.

Referring to FIG. 19, in some embodiments, the aircraft hangar 1000 further includes a mounting device 300 for mounting the cabin 200 to the vehicle body (not shown) of the vehicle 1001, thereby mounting the aircraft hangar 1000 to the vehicle body. Referring to FIG. 19, in some embodiments, the mounting device 300 is configured to mount the cabin 200 to a roof rack or a side of the vehicle 1001, etc. Referring to FIG. 19, in some embodiments, the mounting device 300 includes a connecting arm mechanism 301 and a quick-release connector 302. The connecting arm mechanism 301 is connected to the cabin 200, and the quick-release connector 302 is detachably connected to the connecting arm mechanism 301. The quick-release connector 302 is configured to connect to the body of the vehicle 1001. Since the quick-release connector 302 is detachably connected to the connecting arm mechanism 301, an appropriate quick-release connector 302 can be selected to connect with the connecting arm mechanism 301 based on the different specifications or models of the vehicle 1001, thereby enabling the aircraft hangar 1000 to adapt to vehicle 1001 of different specifications or models. The aircraft hangar 1000 is easy to assemble and connect with the body of the vehicle 1001.

Referring to FIG. 19, in some embodiments, the connecting arm mechanism 301 includes a first connecting arm 3011 and a second connecting arm 3012. The first connecting arm 3011 is connected to the cabin 200, and an end portion thereof is detachably connected to the quick-release connector 302. The second connecting arm 3012 is spaced apart from and disposed opposite to the first connecting arm 3011, and is connected to the cabin 200, and an end portion thereof is detachably connected to the quick-release connector 302. This connecting arm mechanism 301 features a simple structure and light weight, which is conducive to the lightweight design of the aircraft hangar 1000.

The number of first connecting arms 3011 and second connecting arms 3012 may be set according to actual requirements, such as one, two, three, or more.

Referring to FIG. 20, an embodiment of the present application further provides a vehicle 1001 including a power system 3000 and the aircraft hangar 1000 according to any of the above embodiments. The power system 3000 is configured to drive the vehicle 1001 to move, and the aircraft hangar 1000 is carried by the vehicle 1001. By way of example, the power system 3000 includes at least one of the following: a motor, a sail, a rudder, a driving wheel, a cylinder, and the like. In some embodiments, the vehicle 1001 includes at least one of the following: a mobile vehicle, a mobile robot, or a mobile vessel.

It should be understood that, to mitigate the effects of harsh climatic conditions, the aircraft hangar 1000 may include a temperature adjustment device (not shown). The power supply for the temperature adjustment device may come from at least one of the following: electrical energy from the vehicle 1001, solar energy, wind energy, or other energy sources. Solar energy, wind energy, or other energy sources can effectively reduce the overall energy consumption.

By way of example, the vehicle 1001 includes a vehicle body, and the aircraft hangar 1000 is disposed on the vehicle body. The aircraft hangar 1000 may be mounted at any suitable location of the vehicle body. For example, the vehicle 1001 may include a mobile vehicle, and aircraft hangar 1000 may be mounted at least one of the following locations: the front of the mobile vehicle (i.e., the hood area), the roof rack and/or sunroof of the mobile vehicle. When the sunroof is opened, the aircraft 2000 can take off and land through the sunroof. The aircraft hangar 1000 does not occupy excessive interior space due to its compact size. A device protruding from the vehicle body of the mobile vehicle may be added to the exterior of the vehicle's roof to accommodate the aircraft hangar 1000. The rear window of the mobile vehicle, where the rear window is designed as an openable mechanism that automatically opens when the aircraft 2000 takes off or lands; or the trunk of the mobile vehicle, etc.

By way of example, the method of connecting the aircraft hangar 1000 to the vehicle body may include, but is not limited to, at least one of the following: clamping, suction cups, bolts, magnetic attraction, or adhesive bonding.

It should be noted that, in the description of this application, unless otherwise explicitly specified or defined, the terms "mounted," "linked," "connected," "mechanically coupled," and "coupled" should be understood in a broad sense. For example, they may refer to a fixed connection, a detachable connection, or an integral connection. They may refer to a mechanical connection or an electrical connection. They may refer to a direct connection or an indirect connection via an intermediate medium. They may refer to internal communication between two components or an interactive relationship between them. "Mechanical coupled" or "coupled" of two components includes both direct and indirect coupling, such as direct fixed connection or connection via a transmission mechanism. When a first feature is referred to as being "on", "under" a second feature, it may be in direct on, under the second feature, or another feature therebetween may be present. Moreover, when the first feature is referred to as being "on", "above," and "over" the second feature, it may be directly above or diagonally above the second feature, or merely indicate that it may be at a higher horizontal level than the second feature. Furthermore, when the first feature is referred to as being "under," "below," and "beneath" the second feature, it may be directly below or diagonally below the second feature, or merely indicate that it may be at a lower horizontal level than the second feature.

The foregoing disclosure provides many different embodiments or examples for implementing the various structures of the present application. To simplify the disclosure of the present application, the components and configurations of specific examples are described above. Of course, they are merely illustrative and are not intended to limit the present application. Furthermore, the present application may repeat reference numerals and/or reference signs in different examples. Such repetition is for the purposes of simplification and clarity and does not in itself indicate a relationship between the various embodiments and/or configurations discussed. Furthermore, the present application provides examples of various specific processes and materials. However, a person skilled in the art may conceive of the application of other processes and/or the use of other materials.

In the present specification, terms such as "an embodiment," "some embodiments," "illustrative embodiments," "examples," "specific examples," or "some examples" are used to indicate that the specific method steps, features, structures, materials, or characteristics described in connection with an embodiment or example are included in at least one embodiment or example of the present application. In the present specification, the illustrative use of the above terms does not necessarily refer to the same embodiment or example. Furthermore, the specific method steps, features, structures, materials, or characteristics described may be combined in any one or more embodiments or examples in an appropriate manner.

The above are merely specific embodiments of the present application. The scope of protection of the present application is not limited thereto. Various equivalent modifications or substitutions that would be readily apparent to a person skilled in the art within the scope of the technology disclosed herein shall fall within the scope of protection of the present application. Therefore, the scope of protection of the present application shall be subject to the scope of the claims.

## Claims

1. An aircraft apron comprising:
a docking platform configured for landing an aircraft; and
a position adjustment mechanism configured for adjusting a position of the aircraft that has landed on the docking platform, and comprising at least two movable assemblies, wherein the at least two movable assemblies are movable from a relatively central position of the docking platform toward a relatively peripheral position of the docking platform, and are configured for acting on a structural member of the aircraft during movement, so as to drive the aircraft from a landing position to a target position.

2. The aircraft apron according to claim 1, wherein the at least two movable assemblies move in directions away from each other; and/or a distance between the at least two movable assemblies gradually increases during movement.

3. The aircraft apron according to claim 1, wherein the at least two movable assemblies move linearly or curvilinearly.

4. An aircraft apron according to claim 1, wherein the at least two movable assemblies move synchronously or asynchronously.

5. The aircraft apron according to claim 1, wherein each of the movable assemblies comprises a force-applying concave surface that abuts against the structural member during movement of the movable assemblies so as to drive the aircraft to move.

6. The aircraft apron according to claim 5, wherein the force-applying concave surface is configured to apply a force to the aircraft from a direction toward an exterior of the aircraft.

7. The aircraft apron according to claim 5, wherein the force-applying concave surface comprises at least one of the following: a V-shaped surface, a U-shaped surface, a C-shaped surface, an S-shaped surface, an arc-shaped surface, or a spherical surface.

8. The aircraft apron according to claim 1, wherein the position adjustment mechanism further comprises a drive device configured for driving the at least two movable assemblies to move, the drive device being disposed inside the aircraft apron on a side opposite to the docking platform.

9. The aircraft apron according to claim 8, wherein the drive device comprises a rotating disk configured for driving the at least two movable assemblies to move away from or toward a center of the rotating disk during rotation.

10. The aircraft apron according to claim 9, wherein the position adjustment mechanism further comprises a guide assembly configured for defining a direction of movement of the movable assemblies relative to the docking platform, the movable assemblies move along the direction defined by the guide assembly during rotation of the rotating disk.

11. The aircraft apron according to claim 9, wherein the rotating disk is provided with arc-shaped guides arranged in a fan-blade pattern, and wherein one end of the movable assembly is connected to the arc-shaped guides, and the arc-shaped guides are configured for driving the movable assembly to move linearly as the arc-shaped guides rotate together with the rotating disk.

12. An aircraft apron comprising:
a docking platform configured for landing an aircraft; and
a position adjustment mechanism configured for adjusting a position of the aircraft that has landed on the docking platform, the position adjustment mechanism comprising at least two movable assemblies, each of the movable assemblies being configured to rotate relative to the docking platform, and act on a structural member of the aircraft during rotation so as to drive the aircraft from a landing position to a target position;
wherein each of the movable assemblies has a rotation center, and the structural member of the aircraft is located at the rotation center when the aircraft moves to the target position.

13. The aircraft apron according to claim 12, wherein each of the movable assembly comprises a force-applying concave surface with a varying radius of curvature, and wherein the force-applying concave surface abuts against the structural member of the aircraft to drive the aircraft to move when the movable assembly rotates.

14. The aircraft apron according to claim 13, wherein the force-applying concave surface is configured as an arc, and a radius of curvature of the arc gradually decreases along a direction of the force-applying concave surface toward the rotational center.

15. The aircraft apron according to claim 13, wherein each movable assembly comprises at least two force-applying concave surfaces, wherein the at least two force-applying concave surfaces are arranged in a fan-blade pattern.

16. The aircraft apron according to claim 13, wherein the movable assembly further comprises an enclosing member arranged to surround the force-applying concave surface, and wherein the structural member of the aircraft is located between the enclosing member and the force-applying concave surface after the aircraft lands on the docking platform.

17. The aircraft apron according to claim 16, wherein one end of the force-applying concave surface is connected to the enclosing member, and the other end thereof extends toward the rotation center.

18. The aircraft apron according to claim 16, wherein the enclosing member is circular or elliptical.

19. The aircraft apron according to claim 12, wherein the at least two movable assemblies rotate in the same direction.

20. The aircraft apron according to claim 12, wherein a height of the movable assemblies relative to the docking platform is lower than that of the structural member relative to the docking platform.

21. The aircraft apron according to claim 20, wherein, after the aircraft is positioned at the target location, the movable assemblies continue rotating without interfering with the structural member.

22. The aircraft apron according to claim 12, wherein, after the aircraft is positioned at the target location, a rotational speed of the movable assemblies is adjustable to generate airflow for dissipating heat from the aircraft.

23. The aircraft apron according to claim 12, wherein a limiting assembly is provided at the rotation center to limit a position of the structural member after the aircraft moves to the target position.

24. The aircraft parking apron according to claim 23, wherein the limiting assembly comprises a groove recessed into the docking platform; and/or the limiting assembly comprises a magnetic attraction mechanism configured for applying an attractive force to the structural member.

25. The aircraft apron according to claim 12, wherein the position adjustment mechanism comprises drive devices, the at least two movable assemblies corresponding respectively to at least two of the drive devices, or the at least two movable assemblies are driven by the same drive device.

26. The aircraft apron according to claim 25, wherein, when the at least two movable assemblies are driven by the same drive device, one of the movable assemblies is a driving member configured for driving the other movable assemblies to rotate via a transmission assembly.

27. The aircraft apron according to claim 26, wherein the transmission assembly comprises at least one of the following: a transmission rod, a transmission belt, a transmission chain, or a transmission gear.

28. The aircraft apron according to claim 1 or 12, wherein the structural member comprises a landing gear of the aircraft, the landing gear being configured to support the aircraft after the aircraft lands on the docking platform.

29. The aircraft apron according to claim 28, wherein the landing gear comprises at least two landing gears, and the number of the landing gear is less than or equal to the number of the movable assemblies.

30. The aircraft apron according to claim 29, wherein the landing gear comprises four landing gears that form a quadrilateral structure, and the movable assemblies comprises two movable assemblies that are located on a diagonal of the quadrilateral structure.

31. The aircraft apron according to claim 1 or 12, wherein a sensor is provided at the target position, the sensor being configured for detecting whether the aircraft is located at the target position.

32. The aircraft apron according to claim 1 or 12, wherein the target position is provided with a charging assembly configured for charging the aircraft after the aircraft is positioned at the target position, and/or a battery swap assembly configured for replacing a battery in the aircraft after the aircraft is positioned at the target position.

33. The aircraft apron according to claim 1 or 12, wherein the aircraft comprises an unmanned aerial vehicle; and/or the docking platform is provided with a marker that is configured for assisting the aircraft in landing.

34. An aircraft hangar comprising:
a cabin; and
the aircraft apron according to any one of claims 1 to 33, wherein the aircraft apron is receivable within the cabin, and the cabin is openable to allow an aircraft to land.

35. A vehicle, comprising:
a power system configured for driving the vehicle to move; and
the aircraft hangar according to claim 34, wherein the aircraft hangar is carried by the vehicle.

36. The vehicle according to claim 35, wherein the vehicle comprises at least one of: a mobile vehicle, a mobile robot, or a mobile vessel.
